# EUROPÄISCHE PATENTSCHRIFT

(11) **EP 2 356 609 B1**
(45) Veröffentlichungstag und Bekanntmachung des Hinweises auf die Patenterteilung: **02.11.2016**
(21) Anmeldenummer: 09755874.6
(22) Anmeldetag: 10.11.2009
(51) Int. Cl.: G06F 21/34, H04L 29/06, G07F 7/10, G07C 5/08, G07C 9/00, G06Q 20/34

(54) **VERFAHREN UND VORRICHTUNG ZUM ZUORDNEN EINES TRAGBAREN DATENTRÄGERS, INSBESONDERE EINER CHIPKARTE, ZU EINEM ENDGERÄT**
METHOD AND APPARATUS TO ASSOCIATE A PORTABLE DATA CARRIER, IN PARTICULAR A CHIP CARD, TO A TERMINAL
PROCÉDÉ ET DISPOSITIF POUR ASSOCIER UN SUPPORT DE DONNÉES PORTABLE, PARTICULIÈREMENT UNE CARTE À PUCE, À UN TERMINAL

(30) Priorität: 11.11.2008 DE 102008056708
(43) Veröffentlichungstag der Anmeldung: 17.08.2011
(73) Patentinhaber: Giesecke & Devrient GmbH, 81677 München (DE)
(72) Erfinder: MAMUZIC, Nikola, 81829 München (DE); SCHNEIDER, Olaf, 80799 München (DE)
(86) Internationale Anmeldenummer: PCT/EP2009/064888
(87) Internationale Veröffentlichungsnummer: WO 2010/055026

(56) Entgegenhaltungen:
- EP-A1- 1 223 565
- EP-A1- 1 596 538
- DE-A1- 2 528 668
- DE-A1-102006 061 338
- DE-A1-102007 008 651
- DE-C1- 4 339 460
- FR-A1- 2 765 985
- US-B1- 6 772 331
- STAJANO F: "The resurrecting Duckling - What next?" SECURITY PROTOCOLS. INTERNATIONAL WORKSHOP PROCEEDINGS, XX, XX, 22. September 2002 (2002-09-22), Seiten 1-11, XP002290300
- THE BLUETOOTH FORUM: "Generic Access Profile" INTERNET CITATION 22. Februar 2001 (2001-02-22), XP002175814 Gefunden im Internet: URL:http://www.bluetooth.com/developer/spe cification/BLUETOOTH_11_Profile s_Book.pdf> [gefunden am 2001-08-24]

## Beschreibung

Die Erfindung betrifft ein Verfahren zum Zuordnen eines tragbaren Datenträgers, insbesondere einer Chipkarte, zu einem Endgerät. Ferner betrifft die Erfindung einen entsprechenden Datenträger bzw. ein entsprechendes Endgerät und ein System aus Datenträger und Endgerät.

Tragbare Datenträger werden heutzutage vermehrt in sog. Machine-to-Machine-Anwendungen eingesetzt, bei denen sich ein Endgerät ohne menschliche Interaktion basierend auf einem Identifikationswert gegenüber dem Datenträger authentisiert. Dabei besteht das Problem, dass dem Datenträger und dem Endgerät bei deren Auslieferung der gleiche Identifikationswert zugeordnet sein muss, damit eine Authentisierung stattfinden kann. Ohne entsprechende Authentisierung gegenüber dem Datenträger ist das Endgerät nicht nutzbar. Demzufolge ist eine entsprechende Logistik erforderlich, welche sicherstellt, dass der Datenträger und das Endgerät, welche einem Benutzer bereitgestellt werden, miteinander gepaart sind, d.h. eindeutig über den gleichen, nur dem Datenträger und dem Endgerät bekannten Identifikationswert einander zugeordnet sind, so dass eine Authentisierung des Endgeräts gegenüber dem Datenträger erfolgen kann.

Das Dokument US 2007/0160207 A1 beschreibt ein Verfahren, bei dem mehrere Sicherheitsmodule einem Empfangsdecoder zugeordnet werden können. Dies geschieht dadurch, dass ein Identifikationswert des jeweiligen Sicherheitsmoduls, welches mit dem Decoder verbunden ist, in dem Decoder gespeichert wird. Über ein Verwaltungssystem wird ein Zugriff auf den Empfangsdecoder durch solche Sicherheitsmodule ermöglicht, deren Identifikationswerte in dem Empfangsdecoder gespeichert sind.

In der Druckschrift JP 2003-143326 ist ein drahtloses Kommunikationssystem beschrieben, welches eine elektronische Identifikationskarte zur Paarung eines Endgeräts mit einem Terminal verwendet. Dabei wird ein Paarungs-Identifikationswert basierend auf einem PIN-Code eines UIM-Moduls generiert.

Aus der EP 1850 255 A1 ist ein Verfahren zum Zuordnen eines Endgerätes zu einem Chipkartenlesegerät bekannt, das insbesondere in drahtlosen Netzwerken einsetzbar ist, um den Zugriff mehrerer Kommunikationsendgeräte auf eine in einem Lesegerät befindliche Chipkarte zu ermöglichen. Hierzu wird einem neu zuzuordnenden Endgerät zunächst ein Identifikationswert des Lesegerätes bekannt gemacht, wobei die Bekanntmachung unter Einschaltung eines Nutzers erfolgt, der den vom Lesegerät ausgegebenen Identifikationswert auf das zuzuordnende Endgerät überträgt. Anschließend wird, wiederum unter Einschaltung eines Nutzers, zwischen Kartenleser und zuzuordnendem Endgerät ein zweiter Identifikationswert in Form einer PIN ausgetauscht. Das bekannte Verfahren hat zum Ziel und ermöglicht es, eine in einem Lesegerät befindliche Chipkarte grundsätzlich einer beliebigen Anzahl von Endgeräten zuzuordnen. Das Verfahren basiert auf einer leistungsfähigen Kommunikationsinfrastruktur. Für einfache, ohne Mitwirkung eines Nutzers selbsttätig ausführbare Absicherungsaufgaben ist es nicht geeignet.

Aus der DE 10218 835 A1 ist weiterhin ein Verfahren zur Initialisierung und Personalisierung von Chipkarten bekannt, nach dem vom Hersteller des Chips ein öffentlicher Schlüssel eines späteren Abnehmers in den Chip eingebracht wird. Nach Übergabe des Chips an den Chipkartenhersteller werden dort ausgehend von dem zuvor eingebrachten öffentlichen Schlüssel neue Schlüssel ausgehandelt. Das Verfahren erlaubt es, von der sonst strengen organisatorischen Trennung von Initialisierung und Personalisierung abzurücken, ohne die Sicherheit des Personalisierungsvorganges zu gefährden. Das Verfahren setzt voraus, daß den beteiligten Komponenten bereits vor der ersten Zuordnung individuelle Schlüssel bekannt sind. Es erfordert ein entsprechend aufwendiges Schlüsselmanagement.

Aus der DE4339460 ist weiterhin ein Verfahren zur Authentisierung einer Chipkarte durch ein Endgerät bekannt, wobei Karte und Endgerät sich einen Identifikationswert teilen. Weiterhin weist dieses Verfahren einen Fehlerzähler auf.

Aufgabe der Erfindung ist es, die Zuordnung eines tragbaren Datenträgers zu einem Endgerät zu verbessern.

Diese Aufgabe wird durch ein Verfahren gemäß Patentanspruch 1 bzw. einen tragbaren Datenträger gemäß Patentanspruch 9 bzw. ein Endgerät gemäß Patentanspruch 11 bzw. ein System gemäß Patentanspruch 14 gelöst. Vorteilhafte Ausgestaltungen der Erfindung sind in den abhängigen Ansprüchen definiert.

In dem Verfahren gemäß einer bevorzugten Umsetzung der Erfindung erfolgt basierend auf einer Kommunikation zwischen einem Datenträger und einem Endgerät, welche vorzugsweise ohne Benutzerinteraktion stattfindet, eine Paarung des Datenträgers mit dem Endgerät, d.h. eine wechselseitig eindeutige Zuordnung zwischen Datenträger und Endgerät. Hierfür ist dem Datenträger und dem Endgerät zunächst jeweils ein erster Identifikationswert zugeordnet, bei dem es sich um einen Standardwert handelt, der für eine Mehrzahl von vorbestimmten Datenträgern und eine Mehrzahl von vorbestimmten Endgeräten vorgegebenen ist. Der Datenträger und das Endgerät werden dementsprechend zunächst mit einem Standardwert personalisiert, wobei dieser Wert einer Vielzahl von Endgeräten und Datenträgern bekannt ist. In dem Verfahren gemäß einer bevorzugten Ausführung der Erfindung wird im Falle, dass der Datenträger dem Endgerät nicht zugeordnet ist, basierend auf dem ersten Identifikationswert ein Authentisierungsvorgang zur Authentisierung des Endgeräts gegenüber dem Datenträger durchgeführt, wobei in dem Authentisierungsvorgang eine Verifikation dahingehend erfolgt, ob dem Datenträger und dem Endgerät der gleiche erste Identifikationswert zugeordnet ist. Ist diese Verifikation erfolgreich, d.h. stimmen die ersten Identifikationswerte von Datenträger und Endgerät überein, und ist ferner die Anzahl der mit dem Datenträger erfolgreich durchgeführten Verifikationen basierend auf dem ersten Identifikationswert kleiner als ein vorgegebener Wert, wird ein zweiter Identifikationswert zwischen dem Datenträger und dem Endgerät ausgehandelt, der dem Datenträger und dem Endgerät für eine nachfolgende Authentisierung des Endgeräts gegenüber dem Datenträger in nachfolgenden Authentisierungsvorgängen zugeordnet wird.

In dem Verfahren gemäß einer bevorzugten Ausführung der Erfindung erfolgt somit eine Paarung zwischen Endgerät und Datenträger nicht bereits vor einer erstmaligen Kommunikation zwischen Datenträger und Endgerät. Vielmehr wird durch einen Standard-Identifikations-wert zunächst nur sichergestellt, welche Art von Endgerät mit welcher Art von Chipkarte kommunizieren kann. Datenträger und Chipkarte können deshalb vorteilhaft zunächst in einem ungepaarten Zustand ausgeliefert werden. Das hat den Vorteil, dass durch logistische Maßnahmen nicht sichergestellt werden muss, dass ein bestimmtes Endgerät immer mit einem damit gepaarten Datenträger einem Benutzer bereitgestellt wird. Datenträger und Endgerät lassen sich vorteilhaft bei der erstmaligen Kommunikation einander zuordnen, wobei die Paarung über das Aushandeln eines zweiten Identifikationswerts erfolgt, der dann nur dem Datenträger und dem Endgerät bekannt ist. Gemäß einer bevorzugten Ausführung der Erfindung ist ferner vorgesehen, dass ein Datenträger, nur dann mit einem Endgerät neu gepaart wird, wenn die Anzahl an zuvor erfolgreich durchgeführten Verifikationen basierend auf dem ersten Identifikationswert kleiner als ein vorgegebener Maximalwert ist.

Gemäß einer bevorzugten Ausführung der Erfindung wird bei jeder erfolgreichen Verifikation des ersten Identifikationswertes durch den Datenträger ein Zähler in dem Datenträger inkrementiert oder dekrementiert, wobei im Falle, dass der Zähler einen Maximalwert oder einen Minimalwert erreicht, der Datenträger blockiert wird.

In einer vorteilhaften Ausführungsform eines die Erfindung realisierenden Verfahrens wird der zweite Identifikationswert ausgehandelt, indem der Datenträger einen Zufallswert als zweiten Identifikationswert generiert und dieser Zufallswert in dem Datenträger und dem Endgerät gespeichert wird. Hierdurch wird in geeigneter Weise sichergestellt, dass eine Paarung mit einem zweiten Identifikationswert erfolgt, der nur dem Datenträger und dem Endgerät bekannt ist.

In einer weiteren Ausführungsform eines die Erfindung realisierenden Verfahrens wird der Datenträger blockiert, falls die Verifikation des ersten Identifikationswertes nicht erfolgreich ist oder die Anzahl der mit dem Datenträger erfolgreich mit dem ersten Identifikationswert durchgeführten Verifikationen größer oder gleich dem vorgegebenen Maximalwert ist. Ferner werden durch die Blockierung der Chipkarte Angriffsversuche unterbunden, mit denen versucht wird, ein Endgerät durch eine unerlaubte Neuzuordnung nochmals mit einem Datenträger zu paaren.

Im Regelfall kann ein blockierter Datenträger nicht weiter verwendet werden. Jedoch kann auch die Möglichkeit einer Deblockierung des Datenträgers vorgesehen sein, wobei diese Deblockierung durch das Endgerät initialisiert werden kann. Dabei können entsprechende Kriterien festgelegt werden, wann eine solche Deblockierung erlaubt sein soll. In diesem Deblockierungsvorgang wird zwischen dem Datenträger und dem Endgerät ein neuer zweiter Identifikationswert ausgehandelt. Sollte der Deblockierungsvorgang nicht möglich sein bzw. nicht erfolgreich sein, wird die weitere Verwendung des Datenträgers unmöglich, d.h. der Datenträger wird unbrauchbar.

In einer vorteilhaften Variante eines die Erfindung realisierenden Verfahrens fordert der Datenträger für die Festestellung, ob bereits eine Paarung vorliegt, den von dem Endgerät dessen Identifikationswert an und überprüft diesen auf Übereinstimmung mit dem im Datenträger hierzu gespeicherten ersten Identifikationswert.

In einer weiteren Ausgestaltung der Erfindung wird im Falle, dass dem Datenträger bereits ein zweiter Identifikationswert zugeordnet ist, zunächst ein Authentisierungsvorgang zur Authentisierung des Endgeräts gegenüber dem Datenträger basierend auf dem zweiten Identifikationswert durchgeführt, wobei in dem Authentisierungsvorgang eine Verifikation dahingehend erfolgt, ob dem Datenträger und dem Endgerät der gleiche zweite Identifikationswert zugeordnet ist. Hierdurch wird sichergestellt, dass zunächst eine Überprüfung dahingehend erfolgt, ob bei einer Kommunikation zwischen Datenträger und Endgerät eine Paarung zwischen diesem Datenträger und diesem Endgerät vorliegt. Liegt eine solche Paarung nicht vor, d.h. ist die Verifikation nicht erfolgreich, wird der Authentisierungsvorgang beendet.

In einer besonders bevorzugten Ausführungsform eines die Erfindung realisierenden Verfahrens wird als erster Identifikationswert eine mehrstellige Ziffernfolge verwendet, wobei der erste Identifikationswert vorzugsweise eine einfache Standardziffernfolge ist, beispielsweise "0000".

Neben einem Verfahren umfasst eine Ausführung die Erfindung einen zur jederzeitigen Mitführung durch einen Nutzer geeigneten tragbaren Datenträger in einer kompakten, hosentaschengerechten Bauform, insbesondere eine Chipkarte, wobei dem Datenträger der oben beschriebene erste Identifikationswert zugeordnet ist und der Datenträger derart ausgestaltet ist, dass er einem Endgerät basierend auf jeder Variante des oben beschriebenen erfindungsgemäßen Verfahrens zugeordnet werden kann.

Eine weitere Ausführung der Erfindung betrifft ein entsprechendes Endgerät, dem ein erster Identifikationswert zugeordnet ist, wobei das Endgerät derart ausgestaltet ist, dass ein Datenträger dem Endgerät basierend auf jeder Variante des oben beschriebenen Verfahrens zugeordnet werden kann. Der Begriff "Endgerät" ist dabei weit auszulegen und kann jedes beliebige elektronische Gerät bzw. jede beliebige elektronische Einrichtung umfassen, wobei die elektronische Einrichtung gegebenenfalls auch auf mehrere Geräte verteilt sein kann, welche zusammen ein Endgerät im Sinne der Erfindung bilden. Beispielsweise kann das Endgerät ein Telekommunikationsendgerät sein, insbesondere ein Mobilfunkendgerät in der Form eines Handys. Ebenso kann das Endgerät ein Computer sein, beispielsweise ein mobiler Computer in der Form eines Laptops. Ein Endgerät im Sinne der Erfindung kann auch ein Radioempfangsgerät, z.B. ein Autoradio, eine Steuerelektronik, wie z.B. eine Autosteuerelektronik, oder ein Verbrauchszähler, z.B. für Gas, Wasser oder Strom, sein.

Neben dem oben beschriebenen Datenträger und dem oben beschriebenen Endgerät betrifft eine weitere Ausführung der Erfindung ferner ein System, welches einen solchen Datenträger und ein solches Endgerät umfasst.

Beispiele für Ausführungen der Erfindung werden nachfolgend anhand der beigefügten Figuren detailliert beschrieben.

Es zeigen:
- Fig. 1: eine schematische Darstellung der Initialisierung einer Kommunikation zwischen einer Chipkarte und einem Modem; und
- Fig. 2: ein Flussdiagramm, welches die in einer Ausführungsform eines die Erfindung realisierenden Verfahrens durchgeführten Schritte wiedergibt.

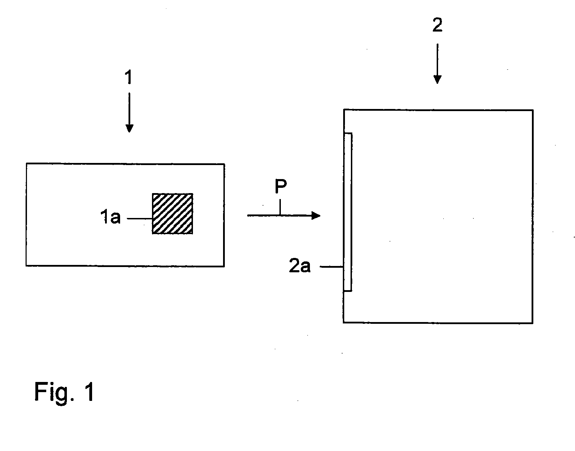

Fig. 1 zeigt beispielhaft eine mögliche Initialisierung einer Kommunikation zwischen einem tragbaren Datenträger 1 und einem Endgerät 2 zur anschließenden Durchführung einer Zuordnungsprüfung basierend auf einem die Erfindung realsierenden Verfahren. In dem Beispiel der Fig.1 soll eine Zuordnung zwischen einer Chipkarte 1 umfassend einen entsprechenden Chip 1a und einem schematisch mit dem Bezugszeichen 2 dargestellten Modem geprüft bzw. durchgeführt werden. Die Chipkarte stellt dabei eine spezielle Ausführungsform eines tragbaren Datenträgers und das Modem eine spezielle Ausführungsform eines Endgeräts 2 dar. Andere Ausführungsformen für den tragbaren Datenträger 1 sind beispielsweise die Form eines "Tokens", etwa eines USB-Token, eines "Key Fobs" oder einer Armbanduhr. Das Endgerät 2 kann grundsätzlich ein beliebiges elektronisches Gerät sein, beispielsweise ein Telekommunikationsendgerät, etwa ein Handy, ein Radio-empfangsgerät, etwa ein Autoradio, oder ein Verbrauchszähler, etwa für Strom, Gas oder Wasser. Das Endgerät 2 kann in jedem Fall nur dann betrieben werden, wenn die Chipkarte 1 dem Endgerät 2 zumindest zeitweise zugeordnet ist oder zugeordnet werden kann.

Das nachfolgend der besseren Anschaulichkeit halber stellvertretend für ein Endgerät 2 exemplarisch zugrundegelegte Modem 2 beinhaltet ein (nicht gezeigtes) Lesegerät zum Auslesen des Chips 1a, wobei zur Initialisierung der Kommunikation die Chipkarte 1 an dem Lesegerät präsentiert wird, indem sie bei kontaktbehafteter Ausführung, etwa, wie durch einen entsprechenden Pfeil P angedeutet, in einen Schlitz 2a des Modems 2 zur Kommunikation mit dem Lesegerät eingeführt wird. Arbeitet die Chipkarte 1 andererseits kontaktlos, wird sie einfach in das Lesefeld des Lesegerätes gebracht. Die Chipkarte 1 wird in der vorliegenden Beschreibung der Einfachheit wie eine selbst aktive Einheit beschrieben. Tatsächlich kommunizieren Chipkarte 1 und Modem 2 selbstverständlich in einem Master-Slave-Verhältnis, wobei die Chipkarte als Slave agiert. Die praktische Realisierung einer entsprechenden Kommunikation ist in der Fachwelt hinlänglich bekannt, etwa aus dem "Handbuch für Chipkarten" von W.Rankl, W.Effing, 5. Auflage, Hanser-Verlag, auf das hierzu ausdrücklich verwiesen wird.

In Chipkarte 1 und Modem 2 ist ab Auslieferung jeweils wenigstens ein Datum zu Erkennung und Verifizierung, die sogenannte Card Holder Verification (= CHV), hinterlegt, mit deren Hilfe eine Zuordnung beider zueinander möglich ist. Bei Auslieferung tragen Chipkarte 1 und Moden 2 jeweils eine CHV, die auf einen Standardwert eingestellt ist-. Wie nachfolgend noch näher beschrieben wird, besteht bei der Auslieferung der Chipkarte 1 bzw. des Modems 2 an einen Benutzer vorab keine Zuordnung bzw. Paarung zwischen Chipkarte und Modem. Eine entsprechende Paarung wird erst bei einer erstmaligen Kommunikation zwischen der Chipkarte und dem Modem herbeigeführt, sofern Chipkarte und Modem mit dem gleichen Standardwert für die Card Holder Verification (= CHV) ausgeliefert wurden. Dieser Standard-CHV-Wert stellt eine Ausführungsform eines ersten Identifikationswerts im Sinne der Ansprüche dar. Die CHV kann z.B. die Form einer PIN (PIN = Personal Identification Number) haben und aus einer mehrstelligen alphanumerichen Zeichenfolge bestehen. Der Standard-CHV-Wert legt fest, welche Arten von Chipkarten mit welchen Arten von Endgeräten prinzipiell kommunizieren können. Diese Arten von Chipkarten und Endgeräten werden mit der gleichen Standard-PIN initialisiert. Bei Ausführung als Standard-PIN kann der Standard-CHV-Wert z.B. eine vierstellige Zahlenkombination sein, etwa "0000".

Bei der erstmaligen Kommunikation einer Chipkarte 1 mit einem Modem 2, mit dem die Chipkarte 1 gepaart werden soll, wird dann ein neuer, von dem Standard-CHV-Wert verschiedener CHV-Wert erstellt, der nur der Chipkarte 1 und dem Modem 2 bekannt ist. Über diesen zweiten CHV-Wert, der einer Ausführungsform eines zweiten Identifikationswerts im Sinne der Ansprüche entspricht, erfolgt eine eindeutige Zuordnung bzw. Paarung von Chipkarte und Modem.

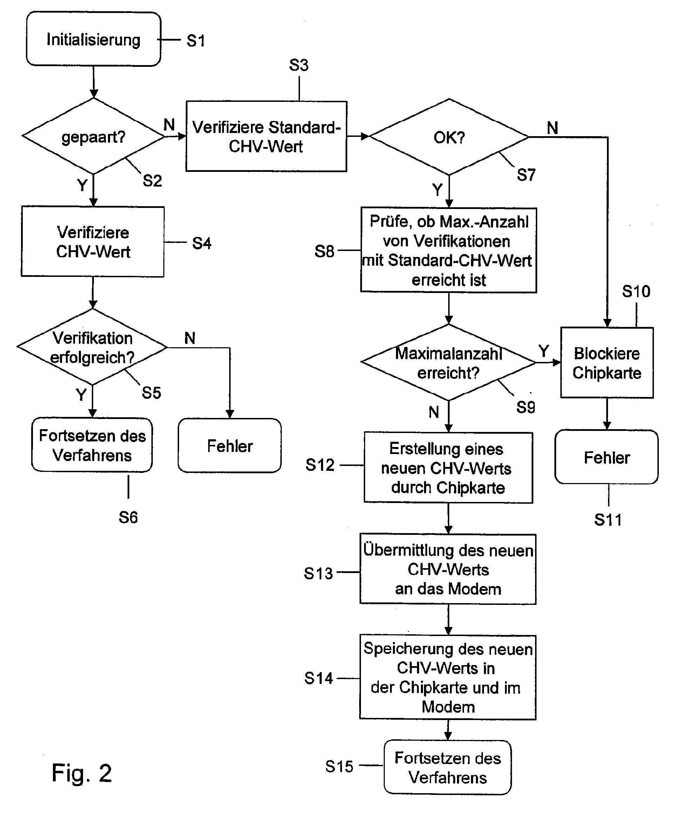

Nachfolgend wird eine Ausführungeines die Erfindung realisierenden Zuordnungsverfahrens basierend auf dem Ablaufdiagramm der Fig. 2 beschrieben. Das Verfahren wird zunächst im Schritt S1 zurückgesetzt bzw. initialisiert, wobei die Initialisierung durch die Aufnahme einer Kommunikation zwischen Chipkarte 1 und Modem 2 erfolgt, d.h. indem die Chipkarte 1 über den Schlitz 2a mit dem Lesegerät des Modems 2 verbunden wird.

In einem Schritt S2 wird sodann überprüft, ob die Chipkarte bereits mit einem Modem gepaart ist bzw. ob das Modem bereits mit einer Chipkarte gepaart ist. Ob eine Paarung vorliegt, kann die Chipkarte für sich einfach feststellen, indem sie prüft, ob der in der Chipkarte gespeicherte CHV-Wert der Standard-CHV-Wert oder ein davon verschiedener CHV-Wert ist. Der Standard-CHV-Wert ist entweder auf der Chipkarte gespeichert oder er wird der Chipkarte von dem Modem zur Verfügung gestellt. Ergibt der Vergleich in Schritt S2, daß der in der Chipkarte gespeicherte CHV-Wert dem Standard-CHV-Wert entspricht (Zweig N aus Schritt S2), ist die Chipkarte nicht gepaart und es wird zu Schritt S3 übergegangen.

Ergibt der Vergleich in Schritt S2, daß der in der Chipkarte gespeicherte CHV-Wert nicht dem Standard-CHV-Wert enstpricht, d.h. ist die Chipkarte bereits einem Modem zugeordnet (Zweig Y aus Schritt S2), erwartet die Chipkarte von dem Modem die Übersendung von dessen CHV-Wert. Nach Erhalt erfolgt in Schritt S4 eine Verifikation, ob der von dem Modem übermittelte CHV-Wert mit dem in der Chipkarte gespeicherten CHV-Wert übereinstimmt. In Abhängigkeit davon, ob die Verifikation erfolgreich ist oder nicht (Schritt S5), werden entsprechende Folgeschritte durchgeführt. Sollte die Verifikation erfolgreich sein (Zweig Y aus Schritt S5), wird das Verfahren fortgesetzt, was in Fig. 2 durch Schritt S6 angedeutet ist. Im Besonderen kann das Modem nunmehr seinen bestimmungsgemäßen Betrieb aufnehmen bzw. in einen Zustand versetzt werden, dass es funktionsfähig ist und in Betrieb gesetzt werden kann.

Sollte die Überprüfung gemäß Schritt S5 nicht erfolgreich sein (Zweig N aus Schritt S5), d.h. liegt keine Paarung zwischen Chipkarte und Modem vor, beendet die Chipkarte das Verfahren. Es erfolgt dann weder eine Paarung von Chipkarte und Modem noch ist eine Nutzung des Modems möglich.

In Schritt S3 erfolgt ein Authentisierungsvorgang des Modems gegenüber der Chipkarte, indem die Standard-CHV-Werte, die bei Auslieferung in Chipkarte und Modem hinterlegt sind, verifiziert werden. Die Chipkarte 1 erwartet hierzu von dem Modem 2 die Übersendung des im Modem 2 hinterlegten CHV-Wertes. Ist dieser eingegangen, setzt die Chipkarte einen Zähler hoch, der die zulässige Anzahl von Verifikationen des Standard-CHV-Wertes angibt. Sodann vergleicht die Chipkarte ihn mit der in der Chipkarte hinterlegten Standard-PIN. In Abhängigkeit davon, ob die Standard-PIN der Chipkarte 1 mit der Standard-PIN des Modems 2 übereinstimmt oder nicht (Schritt S7), werden entsprechende weitere Schritte eingeleitet.

Sollte die Verifikation erfolgreich sein (Zweig Y aus Schritt S7), ist eine Zuordnung der Chipkarte 1 zu dem Modem 1 prinzipiell durchführbar. Ob eine Zuordnung tatsächlich durchgeführt wird, hängt davon ab, ob ein vorgegebener Maximalwert für die zulässige Anzahl an Verifikationen des Standar-CHVs und damit die Höchstzahl an neuen Zuordnungen bereits erreicht wurde oder nicht. Der Maximalwert legt fest, wie oft eine Chipkarte einem Endgerät, oder anders: wie vielen Endgeräten sie neu zugeordnet werden kann. In der Regel wird die Maximalanzahl an Verifikationen des Standard-CHV-Wertes auf 1 gesetzt, wodurch sichergestellt wird, dass eine Chipkarte nur genau einem Modem bzw. Endgerät zugeordnet werden kann. An die Stelle einer Maximalzahl kann auch ein Minimalwert treten, auf den ausgehend von einem Startwert heruntergezählt wird. Demzufolge wird in Schritt S9 überprüft, ob mit der vorhergehenden erfolgreichen Verfikation für die Standard-PIN die vorgegebene Maximalanzahl an erfolgreichen Verifikationen erreicht wurde.

Ergibt die Überprüfung in Schritt S9, daß die Maximalanzahl bereits erreicht wurde (Zweig Y aus Schritt S9), wird die Chipkarte blockiert (Schritt S10) und ein Fehler ausgegeben (Schritt S11). Jeder weitere Zuordnungsversuch führt ebenfalls nur zu einer Blockierung der Chipkarte

Wird in Schritt S9 festgestellt, dass die Maximalanzahl an Verifikationen noch nicht erreicht ist (Zweig N aus Schritt S9), wird zwischen der Chipkarte 1 und dem Modem 2 ein neuer, zweiter CHV-Wert ausgehandelt, der Chipkarte 1 und Modem 2 fortan einander zugeordnet. Dies geschieht in besonders einfacher Weise, indem die Chipkarte in Schritt S12 z.B. eine Zufallszahl erzeugt und daraus einen neuen CHV-Wert ableitet, der sodann an das Modem übermittelt (Schritt S13) und sowohl dort wie in der Chipkarte gespeichert (Schritt S14) wird. Die Bildung des neuen CHV-Wertes kann selbstverständlich auch anders, insbesondere mittels eines aufwendigeren Verfahrens, das ohne weiteres auch einen Dialog zwischen Chipkarte 1 und Modem 2 enthalten kann, erfolgen.

Schließlich wird das Verfahren in Schritt S15 fortgesetzt, indem die Chipkarte 6 neu gestartet wird und mit den zuvor gebildeten neuen CHV-Werten nun durch Ausführung der Schritte S2 und S4 eine Authentisierung des Modems gegenüber der Chipkarte 1 erfolgt. Anschließend kann der Betrieb des Modems 2 aufgenommen werden.

In einer speziellen Variante des oben beschriebenen Verfahrens wird die Blockierung der Chipkarte in Schritt S10 gezielt dadurch erreicht, dass das Modem so lange Authentisierungsversuche mit der Standard-PIN sendet, bis die Chipkarte nach einer vorbestimmten Anzahl von erfolglosen Authentisierungsversuchen blockiert wird. Gegebenenfalls kann anschließend eine UNBLOCK CHV Routine zum Deblockieren der Chipkarte durch das Modem initialisiert werden. Im Rahmen dieser Routine wird ein neuer (zweiter) CHV-Wert zwischen Chipkarte und Modem festgelegt. Dieser Wert ist nur dem Modem und der Chipkarte bekannt und ist beim nächsten Neustart der Kommunikation zwischen Chipkarte und Modem gültig. Schlägt die UNBLOCK-Routine fehl, wird die Chipkarte unbrauchbar.

Ein Servicetechniker, der die obige UNBLOCK CHV Routine kennt, kann die Chipkarte aus dem Modem entnehmen und gegebenenfalls den Standard-CHV-Wert so lange an die Chipkarte senden, bis diese blockiert ist. Anschließend kann der Servicetechniker manuell die UNBLOCK CHV Routine starten, wobei er einen neuen CHV-Wert erstellt, der nur ihm und der Chipkarte bekannt ist. Basierend auf dem neuen CHV-Wert kann der Servicetechniker nun mit der Chipkarte kommunizieren. Nachdem der Servicetechniker die Chipkarte zurück in das Modem steckt, wird von dem Modem so lange der zuletzt gespeicherte CHV-Wert an die Chipkarte gesendet, bis diese wiederum blockiert ist. Schließlich kann die oben beschriebene UNBLOCK CHV Routine durch das Modem angestoßen werden, um einen neuen CHV-Wert zu erstellen. Basierend auf diesem neuen CHV-Wert sind dann die Chipkarte und das Modem wieder gepaart und können miteinander kommunizieren.

Gemäß dem oben beschriebenen Verfahren ist nach Durchführung des Schritts S14 bzw. bei einer erfolgreichen Durchführung der oben beschriebenen UNBLOCK CHV Routine die Chipkarte und das Modem miteinander gepaart. Dabei ist es nicht mehr notwendig, dass bereits bei der Auslieferung der Chipkarte und des Modems eine feste Zuordnung zwischen Chipkarte und Modem besteht, sondern diese Zuordnung wird bei der erstmaligen Kommunikation zwischen Chipkarte und Modem erstellt. Auf diese Weise werden logistische Probleme bei Auslieferung von Chipkarte und Modem vermieden. Chipkarte und Modem können insbesondere ohne weiteres auch getrennt voneinander ausgeliefert werden. Es kann nicht mehr der Fall eintreten, dass versehentlich ein Modem mit einer falsch zugeordneten Chipkarte ausgeliefert wird, denn die Auslieferung von Chipkarte und Modem erfolgt immer mit einem Standard-CHV-Wert. Erst bei der erstmaligen Kommunikation zwischen Chipkarte und Modem wird eine entsprechende Zuordnung bzw. Paarung durch Erstellung eines neuen zweiten CHV-Werts erreicht, der nur Chipkarte und Modem bekannt ist.

In einer Variante des vorbeschriebenen Verfahrens ist jeder Chipkarte 1 eine Kennung zugeordnet und im Endgerät 2 eine Tabelle mit vorzugsweise begrenzter Größe hinterlegt, die den Kennungen verschiedener Chipkarten jeweils einen CHV-Wert zuordnen. Bei Kommunikationsbeginn übermittelt eine Chipkarte 1 dem Endgerät 2 ihre Kennung. Für die Verifikation in Schritt S4 sendet das Endgerät 2 der Chipkarte 1 dann jeweils den der Kennung zugeordneten CHV-Wert. Besitzt das Endgerät 2 zu einer Kennung keinen CHV-Wert, kann, sofern die Tabelle noch nicht vollständig belegt und eine Verifikation des Standard-CHV-Wertes erfolgreich ist, eine Paarung mit der Chipkarte 1 erfolgen. Auf diese Weise ist es möglich, einem Endgerät mehrere Chipkarten zuzuordnen. In grundsätzlich analoger Weise kann die Variante auch in umgekehrter Richtung eingesetzt werden, um es zu ermöglichen, daß eine Chipkarte 1 mehreren Endgeräten 2 zugeordnet werden kann. In diesem Fall bestimmt der Maximalwert für den Zähler zur Erfassung der vorgenommenen Standard-CHV-Wert-Verfikationen, wie vielen Endgeräten eine Chipkarte zugeordnet werden kann.

Unter Beibehaltung des grundlegenden Gedankens, eine eindeutige Zuordnung eines Datenträgers zu einem Endgerät zu erhalten, indem zunächst anhand eines ersten Identifikationswertes geprüft wird, ob Datenträgers und Endgerät noch zugeordnet werden können, und nur wenn diese Prüfung erfolgreich ist, eine Zuordnung vorgenommen werden kann, wobei die Anzahl der Verifikationsversuche für den ersten Identifikationswert in dem Datenträger begrenzt wird, gestattet die vorbeschriebene Lösung weitere Ausgestaltungen. Beispielsweise kann anstelle einer auf dem Datenträger intern durchgeführten Prüfung, ob der gespeicherte CHV-Wert dem Standard-CHV-Wert entspricht, auch einfach die Übersendung eines ersten CHV-Wertes durch das Endgerät abgewartet werden. Der erhaltene CHV-Wert wird dann zunächst, unter Hochsetzen des Zählers, auf Übereinstimmung mit dem Standard-CHV-Wert und falls diese nicht gegeben ist, auf Übereinstimmung mit dem auf dem Datenträger gespeicherten CHV-Wert geprüft.

## Patentansprüche

1. Verfahren zum eindeutigen Zuordnen eines tragbaren Datenträgers (1), insbesondere einer Chipkarte, zu einem Endgerät (2) basierend auf einer Datenkommunikation zwischen dem Datenträger (1) und dem Endgerät (2), wobei dem Datenträger (1) und dem Endgerät (2) jeweils ein erster Identifikationswert zugeordnet ist, welcher ein Standardwert ist, der für eine Mehrzahl von vorbestimmten Datenträgern (1) und eine Mehrzahl von vorbestimmten Endgeräten (2) vorgegeben ist, mit folgenden Schritten:
a) Prüfen, ob der auf dem Datenträger (1) gespeicherte erste Identifikationswert dem Standardwert entspricht, und falls das zutrifft, Durchführen eines Authentisierungsvorganges zur Authentisierung des Endgeräts (2) gegenüber dem Datenträger (1) basierend auf dem ersten Identifikationswert, wobei in dem Authentisierungsvorgang eine Verifikation dahingehend erfolgt, ob dem Datenträger (1) und dem Endgerät (2) der gleiche erste Identifikationswert zugeordnet ist;
b) falls die Verifikation in Schritt a) erfolgreich ist, Prüfen, ob die Anzahl der mit dem Datenträger (1) erfolgreich durchgeführten Verifikationen des ersten Identifikationswertes kleiner ist als ein vorgegebener Wert, und,
c) falls die Anzahl kleiner ist als der vorgegebene Wert, Aushandeln eines zweiten Identifikationswertes zwischen dem Datenträger (1) und dem Endgerät (2), der dem Datenträger (1) und dem Endgerät (2) zur Authentisierung des Endgeräts (2) gegenüber dem Datenträger (1) in nachfolgenden Authentisierungsvorgängen zugeordnet wird.

2. Verfahren nach Anspruch 1, **dadurch gekennzeichnet, dass** bei der Verifikation in Schritt a) der Datenträger (1) den ersten Identifikationswert von dem Endgerät (2) anfordert und die Übereinstimmung des angeforderten Identifikationswert mit dem ihm zugeordneten ersten Identifikationswert überprüft.

3. Verfahren nach Anspruch 1 oder 2, **dadurch gekennzeichnet, dass** der zweite Identifikationswert in Schritt b) derart ausgehandelt wird, dass der Datenträger (1) einen Zufallswert als zweiten Identifikationswert generiert und der Zufallswert in dem Datenträger (1) und dem Endgerät (2) gespeichert wird.

4. Verfahren nach einem der vorhergehenden Ansprüche, **dadurch gekennzeichnet, dass** im Falle, dass die Verifikation in Schritt a) nicht erfolgreich ist oder die Anzahl der mit dem Datenträger (1) erfolgreich durchgeführten Verifikationen größer oder gleich dem vorgegebenen Wert ist, der Datenträger (1) blockiert wird.

5. Verfahren nach Anspruch 4, **dadurch gekennzeichnet, dass** nach einer Blockierung des Datenträgers (1) ein Deblockierungsvorgang durch das Endgerät (2) initialisiert werden kann, wobei in dem Deblockierungsvorgang zwischen dem Datenträger (1) und dem Endgerät (2) ein neuer zweiter Identifikationswert ausgehandelt wird.

6. Verfahren nach einem der vorhergehenden Ansprüche, **dadurch gekennzeichnet, dass** im Falle, dass dem Datenträger (1) und dem Endgerät (2) bereits ein zweiter Identifikationswert zugeordnet ist, zunächst in Schritt a) ein Authentisierungsvorgang zur Authentisierung des Endgeräts (2) gegenüber dem Datenträger (1) basierend auf dem zweiten Identifikationswert durchgeführt wird, wobei im dem Authentisierungsvorgang eine Verifikation dahingehend erfolgt, ob dem Datenträger (1) und dem Endgerät (2) der gleiche zweite Identifikationswert zugeordnet ist, wobei im Falle einer nicht erfolgreichen Verifikation der Authentisierungsvorgang beendet wird.

7. Verfahren nach einem der vorhergehenden Ansprüche, **dadurch gekennzeichnet, dass** bei jeder Verifikation des ersten Identifikationswertes ein Zähler in dem Datenträger (1) inkrementiert oder dekrementiert wird und im Falle, dass der Zähler einen Maximalwert bzw. einen Minimalwert erreicht, der Datenträger (1) blockiert wird.

8. Verfahren nach einem der vorhergehenden Ansprühe, **dadurch gekennzeichnet, dass** der erste und/ oder zweite Identifikationswert eine mehrstellige Ziffernfolge umfasst, wobei der erste Identifikationswert vorzugsweise die Ziffernfolge "0000" umfasst.

9. Tragbarer Datenträger, insbesondere Chipkarte, wobei dem Datenträger (1) ein erster Identifikationswert zugeordnet ist, welcher ein Standardwert ist, der für eine Mehrzahl von vorbestimmten Datenträgern (1) und eine Mehrzahl von vorbestimmten Endgeräten (2) vorgegeben ist, wobei der Datenträger (1) derart ausgestaltet ist, dass er einem Endgerät (2) basierend auf einem Verfahren eindeutig zugeordnet kann, bei dem:
a) falls der auf dem Datenträger (1) gespeicherte erste Identifikationswert noch dem Standardwert entspricht, ein Authentisierungsvorgang zur Authentisierung des Endgeräts (2) gegenüber dem Datenträger (1) basierend auf dem ersten Identifikationswert durchgeführt wird, wobei im dem Authentisierungsvorgang eine Verifikation dahingehend erfolgt, ob dem Datenträger (1) und dem Endgerät (2) der gleiche erste Identifikationswert zugeordnet ist;
b) falls die Verifikation in Schritt a) erfolgreich ist geprüft wird, ob die Anzahl der mit dem Datenträger (1) erfolgreich durchgeführten Verifikationen des ersten Identifikationswertes kleiner ist als ein vorgegebener Wert,
c) und, falls die Anzahl kleiner ist als der vorgegebene Wert, ein zweiter Identifikationswert zwischen dem Datenträger (1) und dem Endgerät (2) ausgehandelt wird, der dem Datenträger (1) und dem Endgerät (2) zur Authentisierung des Endgeräts (2) gegenüber dem Datenträger (1) in nachfolgenden Authentisierungsvorgängen zugeordnet wird.

10. Datenträger nach Anspruch 9, **dadurch gekennzeichnet, dass** mit dem Datenträger (1) ein Verfahren nach einem der Ansprüche 2 bis 8 durchführbar ist.

11. Endgerät, wobei dem Endgerät (2) ein erster Identifikationswert zugeordnet ist, welcher ein Standardwert ist, der für eine Mehrzahl von vorbestimmten Datenträgern (1) und eine Mehrzahl von vorbestimmten Endgeräten (2) vorgegeben ist, wobei das Endgerät (2) derart ausgestaltet ist, dass ein Datenträger (1) dem Endgerät (2) basierend auf einem Verfahren zugeordnet werden kann, bei dem:
a) das Endgerät (2) dem Datenträger (1) sofern nicht bereits ein zweiter, von dem ersten verschiedener Identifikationswert vorhanden ist, den ersten Identifikationswert übermittelt wobei basierend auf dem ersten Identifikationswert ein Authentisierungsvorgang zur Authentisierung des Endgeräts (2) gegenüber dem Datenträger (1) durchgeführt wird, wobei im dem Authentisierungsvorgang eine Verifikation dahingehend erfolgt, ob dem Datenträger (1) und dem Endgerät (2) der gleiche erste Identifikationswert zugeordnet ist;
b) falls die Verifikation des ersten Identifikationswertes erfolgreich ist zwischen dem Datenträger (1) und dem Endgerät (2) ein zweiter Identifikationswert ausgehandelt und im Endgerät (2) gespeichert wird, in nachfolgenden Authentisierungsvorgängen zur Authentisierung des Endgeräts (2) gegenüber dem Datenträger (1) dient.

12. Endgerät nach Anspruch 11, **dadurch gekennzeichnet, dass** mit dem Endgerät (2) ein Verfahren nach einem der Ansprüche 2 bis 8 durchführbar ist.

13. Endgerät nach Anspruch 11 oder 12, **dadurch gekennzeichnet, dass** das Endgerät (2) ein elektronisches Gerät umfasst, insbesondere ein Telekommunikationsendgerät und/ oder einen Computer und/ oder ein Autoradio und/ oder eine Autosteuerelektronik.

14. System, umfassend einen tragbaren Datenträger (1) nach Anspruch 9 oder 10 und ein Endgerät (2) nach einem der Ansprüche 11 bis 13.

## Claims

1. A method for uniquely associating a portable data carrier (1), in particular a chip card, with an end device (2) on the basis of a data communication between the data carrier (1) and the end device (2), the data carrier (1) and the end device (2) having associated therewith respectively a first identification value which is a standard value which is specified for a plurality of predetermined data carriers (1) and a plurality of predetermined end devices (2), having the following steps:
a) checking whether the first identification value stored on the data carrier (1) corresponds to the standard value and, if this is the case, carrying out an authentication process for authenticating the end device (2) to the data carrier (1) on the basis of the first identification value, there being effected in the authentication process a verification as to whether the data carrier (1) and the end device (2) have the same first identification value associated therewith;
b) if the verification in step a) is successful, checking whether the number of verifications of the first identification value carried out successfully with the data carrier (1) is smaller than a specified value, and,
c) if the number is smaller than the specified value, negotiating between the data carrier (1) and the end device (2) a second identification value which is associated with the data carrier (1) and the end device (2) for authenticating the end device (2) to the data carrier (1) in subsequent authentication processes.

2. The method according to claim 1, **characterized in that** upon the verification in step a) the data carrier (1) requests the first identification value from the end device (2), and checks the match of the requested identification value with the first identification value associated therewith.

3. The method according to claim 1 or 2, **characterized in that** the second identification value is negotiated in step b) such that the data carrier (1) generates a random value as the second identification value, and the random value is stored in the data carrier (1) and the end device (2).

4. The method according to any of the preceding claims, **characterized in that** in case the verification in step a) is unsuccessful or the number of verifications carried out successfully with the data carrier (1) is greater than or equal to the specified value, the data carrier (1) is blocked.

5. The method according to claim 4, **characterized in that** after a blocking of the data carrier (1) a deblocking process can be initialized by the end device (2), there being negotiated in the deblocking process a new second identification value between the data carrier (1) and the end device (2).

6. The method according to any of the preceding claims, **characterized in that** in case the data carrier (1) and the end device (2) already have a second identification value associated therewith, there is initially carried out in step a) an authentication process for authenticating the end device (2) to the data carrier (1) on the basis of the second identification value, there being effected in the authentication process a verification as to whether the data carrier (1) and the end device (2) have the same second identification value associated therewith, the authentication process being terminated in case of an unsuccessful verification.

7. The method according to any of the preceding claims, **characterized in that** upon each verification of the first identification value a counter in the data carrier (1) is incremented or decremented, and in case the counter reaches a maximum value or a minimum value the data carrier (1) is blocked.

8. The method according to any of the preceding claims, **characterized in that** the first and/or second identification value comprises a multi-digit numeric string, the first identification value preferably comprising the numeric string "0000".

9. A portable data carrier, in particular chip card, there being associated with the data carrier (1) a first identification value which is a standard value which is specified for a plurality of predetermined data carriers (1) and a plurality of predetermined end devices (2), the data carrier (1) being configured such that it can be uniquely associated with an end device (2) on the basis of a method wherein:
a) if the first identification value stored on the data carrier (1) corresponds to the standard value there is carried out an authentication process for authenticating the end device (2) to the data carrier (1) on the basis of the first identification value, there being effected in the authentication process a verification as to whether the data carrier (1) and the end device (2) have the same first identification value associated therewith;
b) if the verification in step a) is successful it is checked whether the number of verifications of the first identification value carried out successfully with the data carrier (1) is smaller than a specified value,
c) and, if the number is smaller than the specified value, there is negotiated between the data carrier (1) and the end device (2) a second identification value which is associated with the data carrier (1) and the end device (2) for authenticating the end device (2) to the data carrier (1) in subsequent authentication processes.

10. The data carrier according to claim 9, **characterized in that** a method according to any of claims 2 to 8 can be carried out with the data carrier (1).

11. An end device, the end device (2) having associated therewith a first identification value which is a standard value which is specified for a plurality of predetermined data carriers (1) and a plurality of predetermined end devices (2), the end device (2) being configured such that a data carrier (1) can be associated with the end device (2) on the basis of a method wherein:
a) the end device (2) transfers the first identification value to the data carrier (1), provided a second identification value different from the first is not already present, there being carried out on the basis of the first identification value an authentication process for authenticating the end device (2) to the data carrier (1), there being effected in the authentication process a verification as to whether the data carrier (1) and the end device (2) have the same first identification value associated therewith;
b) if the verification of the first identification value is successful, a second identification value is negotiated between the data carrier (1) and the end device (2) and stored in the end device (2), which serves for authenticating the end device (2) to the data carrier (1) in subsequent authentication processes.

12. The end device according to claim 11, **characterized in that** a method according to any of claims 2 to 8 can be carried out with the end device (2).

13. The end device according to claim 11 or 12, **characterized in that** the end device (2) comprises an electronic device, in particular a telecommunication end device and/or a computer and/or an automobile radio and/or automobile control electronics.

14. A system comprising a portable data carrier (1) according to claim 9 or 10 and an end device (2) according to any of claims 11 to 13.

## Revendications

1. Procédé d'association univoque d'un support de données portable (1), en particulier d'une carte à puce, à un terminal (2), sur la base d'une communication de données entre le support de données (1) et le terminal (2), cependant que, au support de données (1) et au terminal (2), il est respectivement associé une première valeur d'identification qui est une valeur standard préétablie pour une pluralité de supports de données (1) prédéterminés et pour une pluralité de terminaux (2) prédéterminés, comprenant les étapes suivantes:
a) examen révélant si la première valeur d'identification mémorisée sur le support de données (1) correspond à la valeur standard, et, si cela est le cas, exécution d'un processus d'authentification pour l'authentification du terminal (2) vis-à-vis du support de données (1) sur la base de la première valeur d'identification, cependant que, dans le processus d'authentification, une vérification a lieu pour repérer si, au support de données (1) et au terminal (2), la même première valeur d'identification est associée;
b) si la vérification à l'étape a) aboutit à un résultat positif, examen révélant si le nombre des vérifications, à résultat positif, de la première valeur d'identification exécutées avec le support de données (1) est inférieur à une valeur préétablie, et,
c) si le nombre est inférieur à la valeur préétablie, négociation d'une deuxième valeur d'identification entre le support de données (1) et le terminal (2), laquelle est associée au support de données (1) et au terminal (2) pour l'authentification du terminal (2) vis-à-vis du support de données (1) dans des processus subséquents d'authentification.

2. Procédé selon la revendication 1, **caractérisé en ce que**, lors de la vérification à l'étape a), le support de données (1) demande la première valeur d'identification du terminal (2) et contrôle la concordance de la valeur d'identification demandée avec la première valeur d'identification lui étant associée.

3. Procédé selon la revendication 1 ou 2, **caractérisé en ce que** la deuxième valeur d'identification est, à l'étape b), négociée de telle façon que le support de données (1) génère une valeur aléatoire en tant que deuxième valeur d'identification et **en ce que** la valeur aléatoire est mémorisée dans le support de données (1) et dans le terminal (2).

4. Procédé selon une des revendications précédentes, **caractérisé en ce que**, dans le cas où la vérification n'a, à l'étape a), pas abouti à un résultat positif, ou que le nombre des vérifications, à résultat positif, exécutées avec le support de données (1) est supérieur ou égal à la valeur préétablie, le support de données (1) est bloqué.

5. Procédé selon la revendication 4, **caractérisé en ce que**, après un blocage du support de données (1), un processus de déblocage par le terminal (2) peut être initialisé, cependant que, dans le processus de déblocage, une nouvelle deuxième valeur d'identification est négociée entre le support de données (1) et le terminal (2).

6. Procédé selon une des revendications précédentes, **caractérisé en ce que**, dans le cas où il est déjà associé au support de données (1) et au terminal (2) une deuxième valeur d'identification, il est tout d'abord, à l'étape a), exécuté un processus d'authentification pour l'authentification du terminal (2) vis-à-vis du support de données (1) sur la base de la deuxième valeur d'identification, cependant que, dans le processus d'authentification, une vérification a lieu pour repérer si c'est la même deuxième valeur d'identification qui est associée au support de données (1) et au terminal (2), cependant que, dans le cas d'une authentification sans résultat positif, le processus d'authentification est arrêté.

7. Procédé selon une des revendications précédentes, **caractérisé en ce que**, à chaque vérification de la première valeur d'identification, un compteur est incrémenté ou décrémenté dans le support de données (1), et **en ce que**, dans le cas où le compteur atteint une valeur maximale ou une valeur minimale, le support de données (1) est bloqué.

8. Procédé selon une des revendications précédentes, **caractérisé en ce que** la première et/ou la deuxième valeur d'identification comprend une suite de plusieurs chiffres, la première valeur d'identification comprenant de préférence la suite de chiffres «0000».

9. Support de données portable, en particulier carte à puce, il étant associé au support de données (1) une première valeur d'identification qui est une valeur standard qui, pour une pluralité de supports de données (1) prédéterminés et pour une pluralité de terminaux (2) prédéterminés, est préétablie, le support de données (1) étant conçu de telle façon qu'il peut être associé de manière univoque à un terminal (2) sur la base d' un procédé, dans lequel:
a) si la première valeur d'identification mémorisée sur le support de données (1) correspond encore à la valeur standard, un processus d'authentification pour l'authentification du terminal (2) vis-à-vis du support de données (1) sur la base de la première valeur d'identification est exécuté, cependant que, dans le processus d'authentification, une vérification a lieu pour repérer si c'est la même première valeur d'identification qui est associée au support de données (1) et au terminal (2);
b) si la vérification à l'étape a) aboutit à un résultat positif, il est examiné si le nombre des vérifications, à résultat positif, de la première valeur d'identification exécutées avec le support de données (1) est inférieur à une valeur préétablie,
c) et, si le nombre est inférieur à la valeur préétablie, une deuxième valeur d'identification est négociée entre le support de données (1) et le terminal (2), laquelle est associée au support de données (1) et au terminal (2) pour l'authentification du terminal (2) vis-à-vis du support de données (1) dans des processus subséquents d'authentification.

10. Support de données selon la revendication 9, **caractérisé en ce que**, avec le support de données (1), un procédé selon une des revendications de 2 à 8 est exécutable.

11. Terminal, cependant que, au terminal (2), il est associé une première valeur d'identification qui est une valeur standard préétablie pour une pluralité de supports de données (1) prédéterminés et pour une pluralité de terminaux (2) prédéterminés, le terminal (2) étant conçu de telle façon qu'un support de données (1) peut être associé au terminal (2) sur la base d' un procédé, dans lequel:
a) le terminal (2) transmet au support de données (1), dans la mesure où il n'y a pas déjà une deuxième valeur d'identification différente de la première, la première valeur d'identification, cependant que, sur la base de la première valeur d'identification, un processus d'authentification destiné à l'authentification du terminal (2) vis-à-vis du support de données (1) est exécuté, cependant que, dans le processus d'authentification, une vérification a lieu pour repérer si, au support de données (1) et au terminal (2), la même première valeur d'identification est associée;
b) si la vérification de la première valeur d'identification aboutit à un résultat positif, une deuxième valeur d'identification est négociée entre le support de données (1) et le terminal (2) et est mémorisée dans le terminal (2), servant, dans des processus subséquents d'authentification, à l'authentification du terminal (2) vis-à-vis du support de données (1).

12. Terminal selon la revendication 11, **caractérisé en ce que**, avec le terminal (2), un procédé selon une des revendications de 2 à 8 est exécutable.

13. Terminal selon la revendication 11 ou 12, **caractérisé en ce que** le terminal (2) comprend un appareil électronique, en particulier un terminal de télécommunication et/ou un ordinateur et/ou un autoradio et/ou une électronique de commande auto.

14. Système comportant un support de données portable (1) selon la revendication 9 ou 10 et un terminal (2) selon une des revendications de 11 à 13.
